# EUROPÄISCHE PATENTANMELDUNG

(11) **EP 1 834 688 A1**
(43) Veröffentlichungstag der Anmeldung: **19.09.2007**
(21) Anmeldenummer: 07003256.0
(22) Anmeldetag: 15.02.2007
(51) Int. Cl.: B01D 53/86

(54) **Verfahren zur Entfernung von Stickoxiden aus Rauchgasen von Verbrennungsöfen**

(30) Priorität: 16.03.2006 DE 102006012206
(71) Anmelder: Linde Aktiengesellschaft, 65189 Wiesbaden (DE)
(72) Erfinder: Beran, Franz, 81476 München (DE); Kaufmann, Dieter, Dr., 82538 Geretsried (DE); Merz, Gerhard, Dr., 82065 Baierbrunn (DE); Schödel, Nicole, Dr., 81477 München (DE)

(57) **Zusammenfassung**

Die Erfindung beschreibt ein Verfahren zur katalytischen Entfernung von Stickoxiden (2) aus Rauchgasen von Verbrennungsöfen (1), das Wasserstoff (H₂) als Reduktionsmittel verwendet und bei einer Temperatur von weniger als 150°C durchgeführt wird.

## Beschreibung

Die Erfindung betrifft ein Verfahren zur selektiven katalytischen Entfemung von Stickoxiden aus sauerstoffhaltigem Rauchgas von Verbrennungsöfen unter Anwesenheit eines Reduktionsmittels.

Bei der Verbrennung von fossilen Brennstoffen wie Kohle, Gas oder Öl entstehen Rauchgase die Stickoxide enthalten. Diese Stickoxide sind für den Menschen schädlich (Reizung bzw. Schädigung der Atemwegsorgane) und eine der Hauptursachen für sauren Regen, Smog- und Ozonbildung unter uv-Strahlung. Daher ist eine möglichst vollständige Entfernung der Stickoxide aus dem Rauchgas vor dem Entweichen in der Atmosphäre erwünscht. Im Zuge strenger werdender EU-Richtlinien zum Stickoxidgehalt in Rauchgasen ist die Anwendung moderner Verfahren zur Entfernung von Stickoxiden ein wirtschaftlich interessantes Feld auch und gerade im Bereich der Nachrüstung von älteren Industrieanlagen.

Nach dem Stand der Technik werden die Stickoxide (NOₓ) im Rauchgas nach dem Verfahren der selektiven katalytischen Reduktion durch Kontaktierung mit einem Katalysator (DeNOx-Katalysator) unter Anwesenheit eines Reduktionsmittels katalytisch zu Stickstoff und Wasser umgesetzt. Als Reduktionsmittel wird nach dem Stand der Technik Ammoniak verwendet, welches in unterschiedlichen Formen (gasförmig, in wässriger Lösung oder durch Umwandlung entsprechender Verbindungen wie Harnstoff) bereitgestellt werden kann. Die katalytische Umwandlung wird nach dem Stand der Technik in einem Temperaturbereich zwischen 250°C und 500°C (z.B. Patent: WO 02/068097 A1) durchgeführt. Um den Katalysator in diesem Temperaturbereich zum Beispiel in den Spaltöfen einer Olefinanlage zu betreiben, kann er entweder im Bereich der Abhitze zwischen den Wärmetauschern angebracht werden oder er muss bei einer Anbringung am kalten Ende des Rauchgasaustrittes bei Temperaturen von unter 150°C mit einer zusätzlichen Anwärmung des Rauchgases ausgestattet sein. In beiden Fällen ist die Nachrüstung von bestehenden Anlagen schwierig, aufwendig und teuer. Das Einbringen des Katalysators in die Abhitze des Spaltofens zwischen die Wärmetauscher erfordert umfangreichere Umbaumaßnahmen verbunden mit längeren Stillstandszeiten der Anlage. Die Positionierung des Katalysatorsystems am kalten Ende der Abhitze kann aufgrund der Gewichtszunahme durch das System und durch die zusätzliche Rauchgasanwärmung nur am Boden erfolgen, was eine zusätzliche Verrohrung verbunden mit umfangreicheren Umbaumaßnahmen erforderlich macht.

Zusätzlich zu den bereits beschriebenen Verfahren im Temperaturbereich zwischen 250°C und 500°C existieren sogenannte Niedertemperatur Verfahren, die ebenfalls Ammoniak als Reduktionsmittel verwenden und auch im Temperaturbereich zwischen 120°C und 350°C eingesetzt werden können (C.J.G. von der Grift, A.F. Woldhuis, O.L. Maaskant, Catalysis Today 27, 23-27 (1996)). Die Anwendung derartiger Verfahren in einem Temperaturbereich unter 150°C ist allerdings nur in Einzelfällen möglich. Das Rauchgas muss frei von Staub- und Schwefelanteilen sein. Schwefel im Rauchgas bildet bei Anwesenheit von Ammoniak und bei Temperaturen unter 150°C Ammoniumsulfat, welches den Katalysator ebenso wie sich unterhalb einer bestimmten Temperatur bildende Salze (NH₄NO₃, NH₄NO₂) deaktiviert. Zusätzlich sinkt die Umwandlung von Stickoxiden im Niedertemperaturbereich (70% NOₓ Umwandlung bei 140°C, aus: C.J.G. von der Grift, A.F. Woldhuis, O.L. Maaskant, Catalysis Today 27, 23-27 (1996)). Daher sind die vorhandenen Niedertemperatur Verfahren für die Nachrüstung von Verbrennungsöfen in älteren Anlagen ebenfalls ungeeignet.

Der vorliegenden Erfindung liegt die Aufgabe zugrunde ein Verfahren zur selektiven katalytischen Entfemung von Stickoxiden aus sauerstoffhaltigem Rauchgas von Verbrennungsöfen unter Anwesenheit eines Reduktionsmittels derart auszugestalten, dass Verbrennungsöfen in bestehenden Anlagen einfach und kostengünstig nachgerüstet werden können.

Diese Aufgabe wird verfahrenseitig dadurch gelöst, dass Wasserstoff als Reduktionsmittel bei einer Temperatur unter 150°C eingesetzt wird.

Die Schwierigkeiten bei der Nachrüstung von Verbrennungsöfen in bestehenden Anlagen ergeben sich aus der Notwendigkeit, das katalytische Verfahren zur Stickoxidentfernung bei Temperaturen über 150°C durchzuführen.

Der Grundgedanke der Erfindung besteht darin, durch den Einsatz von Wasserstoff als Reduktionsmittel die katalytische Entfemung der Stickoxide bei Temperaturen entsprechend der Austrittstemperatur von Rauchgas aus Verbrennungsöfen nach dem Stand der Technik unterhalb von 150°C durchführen zu können.

Gemäß einer besonders bevorzugten Ausführungsform der Erfindung erfolgt die Entfernung von Stickoxiden aus dem Rauchgas durch die Umwandlung der Stickoxide in Stickstoff und Wasser durch das Reduktionsmittel Wasserstoff in Anwesenheit eines geeigneten Katalysators. Vorteilhafterweise wird das Verfahren bei einer Temperatur von weniger als 150°C durchgeführt. Die katalytische Entfemung findet dabei vorzugsweise im kalten Ende der Abhitze des Verbrennungsofens statt.

In einer weiteren Ausgestaltung wird die katalytische Stickoxidentfernung aus den Rauchgasen nach der Abhitze in einem separaten Reaktor durchgeführt. Vorteilhafterweise können in einer weiteren Ausgestaltung der Erfindung in Anlagen mit mindestens zwei Verbrennungsöfen die Rauchgase von mehreren Verbrennungsöfen zusammengeführt und gemeinsam in einem separaten Reaktor von Stickoxiden befreit werden.

In einer zusätzlichen Ausgestaltung der Erfindung wird bei Verbrennungöfen in Olefinanlagen, Wasserstoffanlagen, Synthesegasanlagen oder in ähnliche Anlagen, in denen zwangsläufig Wasserstoff als Prozessgas vorhanden ist, dieser Wasserstoff als Reduktionsmittel zur Stickoxidentfernung verwendet. Gemäß einer Weiterführung des Erfindungsgedankens kann der Wasserstoff nach der Entfernung der Stickoxide durch ein Membranverfahren und/oder ein Druckwechseladsorptionsverfahren aufgereinigt, weiterverarbeitet und/oder zur Stickoxidentfernung zurückgeführt werden.

Mit der Erfindung gelingt es insbesonders durch den Einsatz von Wasserstoff als Reduktionsmittel und die damit verbundene Möglichkeit der Durchführung des Verfahrens bei einer Temperatur unter 150°C Verbrennungsöfen in bereits bestehenden Anlagen einfach und kostengünstig nachzurüsten. Zusätzlich ist der Betrieb des Verfahrens bei Verbrennungsöfen in Olefinanlagen, Wasserstoffanlagen, Synthesegasanlagen oder in ähnlichen Anlagen, in denen Wasserstoff als Prozessgas vorhanden ist, einfach und kostengünstig.

Im Folgenden soll die Erfindung anhand der in den Figuren dargestellten Ausführungsbeispiele der Erfindung näher erläutert werden.

Es zeigen
- Figur 1: ein Ausführungsbeispiel der Erfindung mit Durchführung der katalytischen Entfemung der Stickoxide am Ende des Rauchgaskanals
- Figur 2: ein Ausführungsbeispiel der Erfindung mit zwei Verbrennungsöfen und der gemeinsamen katalytischen Entfernung der Stickoxide für beide Verbrennungsöfen

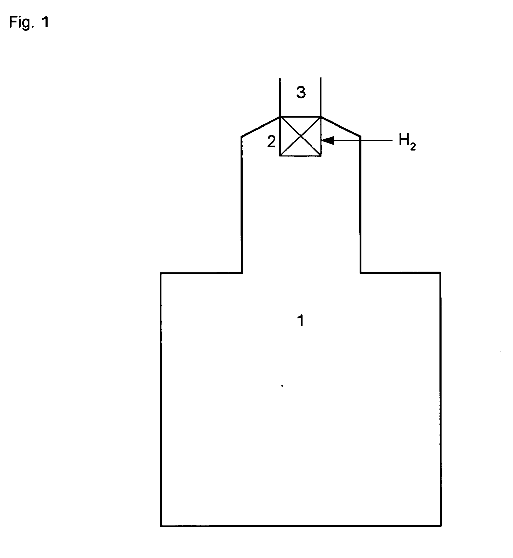

In Figur 1 ist eine Ausgestaltung der Erfindung gezeigt bei der die katalytische Umsetzung der Stickoxide mit Wasserstoff als Reduktionsmittel (H₂) direkt am Ende des Rauchgaskanals (2) des Verbrennungsofens (1) erfolgt. Der katalytische Entfernung der Stickoxide wird direkt in den Verbrennungsofen integriert. Das gereinigte Rauchgas wird in die Atmosphäre entlassen (3).

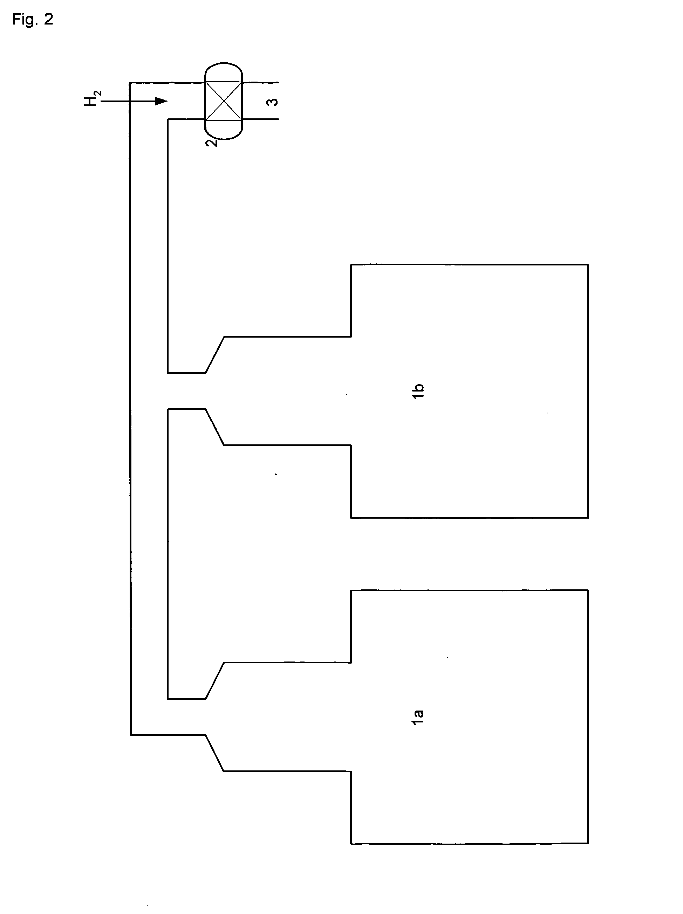

In Figur 2 ist eine weitere Ausgestaltung der Erfindung gezeigt bei der die in den beiden Verbrennungsöfen (1a) und (1 b) erzeugten Rauchgase gesammelt werden. Die katalytische Entfernung der Stickoxide mit Wasserstoff als Reduktionsmittel (H₂) wird für das gesamte Rauchgas in einem separaten Reaktor (2) am Ende der Abgasleitungen vorgenommen. Das gereinigte Rauchgas wird anschließend in die Atmosphäre entlassen (3).

### Auslegungsbeipiel:

Entfernung von Stickoxiden aus dem Rauchgas eines Versuchsofens durch katalytische Umwandlung mit Wasserstoff als Reduktionsmittel:

| Einsatz: | Katalysatorvolumen bezogene | |
|---|---|---|
| | Rauchgasgeschwindigkeit: | 80000 1/Stunde |
| | Temperatur: | 142°C |
| | NOₓ: | 150 Vppm |
| | O₂: | 2,5 Volumenprozent |
| | H₂: | 2000 Vppm |
| | H₂O: | 10% Volumenprozent |
| Umsatz: | NOₓ: | 91 % |

## Patentansprüche

1. Verfahren zur selektiven katalytischen Entfemung von Stickoxiden aus sauerstoffhaltigem Rauchgas von Verbrennungsöfen unter Anwesenheit eines Reduktionsmittels, **dadurch gekennzeichnet, dass** als Reduktionsmittel Wasserstoff bei einer Temperatur unter 150°C eingesetzt wird.

2. Verfahren nach Anspruche 1, **dadurch gekennzeichnet, dass** die katalytische Entfernung der Stickoxide direkt am kalten Ende der Abhitze des Verbrennungsofens durchgeführt wird.

3. Verfahren nach Anspruch 1, **dadurch gekennzeichnet, dass** die katalytische Entfernung der Stickoxide in einem separaten Reaktor nach der Abhitze erfolgt.

4. Verfahren nach einem der Ansprüche 1 bis 3, **dadurch gekennzeichnet, dass** die Rauchgase von mindestens zwei Verbrennungsöfen zusammengeführt und gemeinsam von Stickoxiden befreit werden.

5. Verfahren nach einem der Ansprüche 1 bis 4, **dadurch gekennzeichnet, dass** bei Verbrennungöfen in Olefinanlagen, Wasserstoffanlagen, Synthesegasanlagen oder in ähnlichen Anlagen, in denen zwangsläufig Wasserstoff als Prozessgas vorhanden ist, dieser Wasserstoff als Reduktionsmittel zur Stickoxidentfernung verwendet wird.

6. Verfahren nach Anspruch 5, **dadurch gekennzeichnet, dass** der als Reduktionsmittel benutzte Wasserstoff nach der katalytischen Stickoxidentfernung über ein Membranverfahren und/oder ein Druckwechseladsorptionsverfahren aufgereinigt, weiterverwendet und/oder zur Stickoxidentfemung zurückgeführt wird.
